# EUROPEAN PATENT SPECIFICATION

(11) **EP 2 098 747 B1**
(45) Date of publication and mention of the grant of the patent: **06.06.2012**
(21) Application number: 08004199.9
(22) Date of filing: 06.03.2008
(51) Int. Cl.: F16F 7/10

(54) **Active vibration-extinguisher containing magneto or electrorheological fluids, method for reducing vibrations and uses thereof**
Aktives Vibrationsminderungsgerät mit magneto- oder elektrorheologischen Fluiden, Verfahren zur Vibrationsminderung und Verwendungen davon
Extincteur à vibration active contenant des fluides magnéto ou électro-rhéologiques, procédé de réduction de vibrations et utilisations associées

(43) Date of publication of application: 09.09.2009
(73) Proprietor: Fraunhofer-Gesellschaft zur Förderung der angewandten Forschung e.V., 80686 München (DE)
(72) Inventor: Böse, Holger, 97080 Würzburg (DE); Gerlach, Thomas, 97422 Schweinfurt (DE); Ehrlich, Johannes, 97355 Wiesenbronn (DE); Merlo, Angelo, 28100 Novara (IT); Massimo, Ippolito, 14020 Asti (IT)
(74) Representative: Pfenning, Meinig & Partner GbR

(56) References cited:
- EP-A- 0 338 933
- DE-B3- 10 302 468
- US-A- 3 548 972
- US-A- 4 742 998
- US-A- 4 963 804
- US-A1- 2002 104 950
- US-A1- 2002 123 403
- US-A1- 2004 222 755
- US-A1- 2005 075 210

## Description

Present invention relates to a device for reducing vibrations of a vibrating object as well as a method for reducing vibrations, wherein the perturbing vibrations are reduced drastically by induction of counter-forces. In general, vibrations of equal frequency (counter-vibration) as the perturbing vibration are generated. The force generated by the counter-vibration acts onto the vibrating object, whose amplitude of vibration is to be reduced. The phasing of the counter-vibration is antipodal to the vibration to be reduced, preferably the force of the generated counter-vibration is greater than the force being necessary for compensation of the perturbing vibration. The transfer of the force of the counter-vibration onto the vibrating object is affected by means of a magnetorheological or electrorheological material, whereby the absolute value of the transmitted force is adjusted by the magnitude of an applied magnetical or electric field. With increasing strength of the magnetical or electric field, the magnetorheological or electrorheological material is stiffened increasingly. With optimal adjustments of the strength of the electric or magnetic field, the transmitted force equals the perturbing force and the perturbing vibration is compensated.

Magnetorheological materials, especially fluids, are suspensions of magnetically polarizable particles in a carrier substance, especially a carrier liquid, whose modulus of rigidity, shear modulus, Young's modulus and/or the yield stress can be changed in an electric or magnetic field quickly and reversibly. In analogy, electrorheological materials, especially electrorheological fluids, are suspensions of electrically polarizable particles in a non-conducting carrier liquid, whose modulus of rigidity, the shear modulus, the Young's modulus and/or the yield stress can be changed quickly and reversibly in an electric field. Both classes of materials therefore offer an ideal basis for an adaptive force-transfer wherein the force to be transferred is controlled via the external field.

Devices for reducing vibrations in which the force for reduction of the vibration is generated by a magnetorheological or electrorheological fluid in a magnetic or an electric field, respectively, are already known. The advantage of such devices is the short reaction time towards a change in field intensity. For example, magnetorheological devices for reducing vibrations are known from the EP 1 270 988 B1 and DE 101 43 980 A1.

However, the devices for reducing vibrations known from the prior art are adaptive damping-systems on basis of magnetorheological or electrorheological fluids, in which the damping-force can be controlled by the magnetic or electric field intensity, respectively. The disadvantage of these systems is that only passive forces can be generated.

Document US 4,963,804 A1 discloses a vibration reduction apparatus which makes use of an inertial mass, which is actively excited in order to damp the object to which it is attached.

It is therefore an object of present invention to provide a system for reducing vibrations, which allows providing active forces for reducing vibrations of a vibrating object. Furthermore, it is an object of present invention to provide a method for reducing vibrations for a vibrating object, wherein the method guarantees an effective reducing of vibrations.

These objects are accomplished by the features of the independent claims. The further dependent claims describe advantageous embodiments.

According to the invention, there is provided a device for reducing vibrations of a vibrating object, wherein the device comprises:
a) at least one actively controllable unit for generating a temporarily varying force,
b) at least one force transmitting unit which comprises at least one segment which contains at least one electrorheological and/or magnetorheological material,
c) at least one unit for generating an electric and/or magnetic field,
wherein the device is connected by force to the at least one force transmitting unit.

In contrast to the devices described in prior art, the device for reducing vibrations according to the invention transfers an externally generated force via a magnetorheological or electrorheological material in order to meet individual needs for reducing troublesome vibrations by inducing an actively generated counter-force. The magnetorheological or electrorheological material thereby acts as a coupling-medium, the consistence of which can be controlled via a magnetic or electric field.

Therefore, it is preferred if the at least one actively controllable unit is at least one device for generating a force that varies in one, two and/or three dimensions. Especially, the at least one actively controllable unit comprises at least one motor, preferably a motor selected from the group consisting of electric motors, combustion motors, electromagnetic actuators, voice coils and/or other actuators. In such, the actively controllable unit is not limited as far as it is assured that the device allows a generation of a varying force. In a further embodiment, two or more devices are present for generating the varying force.

In an especially preferred embodiment, the motor is connected by force to an excentric for conversion of a circular motion into stroke movement, in such that the excentric can be agitated by the motor.

A further advantageous embodiment provides that the at least one force transmitting unit comprises two elements which are movable with respect to each other, border the force transmitting unit and enclose the at least one segment, wherein the elements preferably are aligned parallelly. These elements preferably exhibit two surfaces, which are parallel aligned. In such, the shape of the two elements is not limited in any respect, yet it is preferred, if the two elements are selected from the group consisting of plates, cuboids, segments, ovoid shaped elements, spherical shells and/or cones, wherein parallel plates are especially preferred.

Moreover, it is advantageous, if the two elements are movable in one, two and/or three dimensions with respect to each other. In such, the device is separated into two sections which are movable with respect to each other, wherein these two sections are bordered by the two elements.

Herein, it is preferred, if one element is connected by force with the at least one device for generating the varying force, whereas the other element is connectable by force to the vibrating object. This embodiment enables a direct force transmittal between the at least one actively controllable unit and the vibrating object.

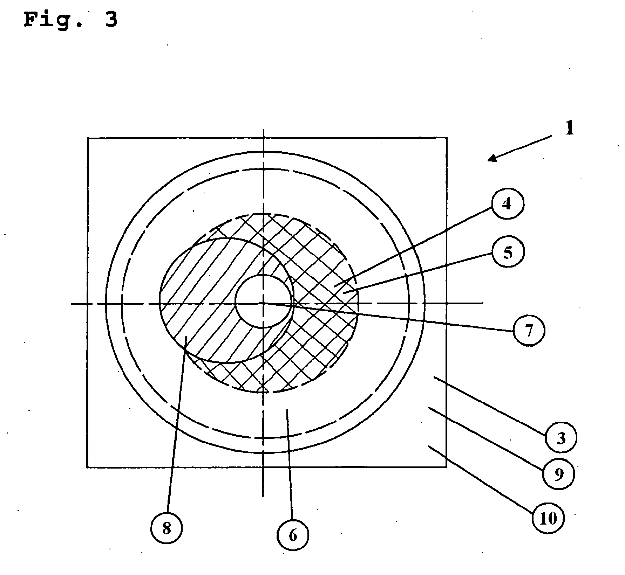

Furthermore, it is a special embodiment of present invention that the segment has a cross-sectional area which is dimensioned smaller than the cross-sectional area of the elements. In this embodiment, in projection onto the cross-sectional area of the segment, the elements are larger and overlap the segment (see also fig. 3 and description).

It is especially preferred, if the at least one unit for generating a magnetic or electric field is at least partially located within the at least one force transmitting unit. It is hereby understood that the unit for generating the field can be composed of any of the parts of the force transmitting unit, e.g. the elements. Alternatively, the unit can be composed of additional parts, which are at least partially located inside the force transmitting unit. Those embodiments guarantee an extremely compact assembly of the device.

A further advantageous embodiment provides that the unit for generating an electric and/or magnetic field is located in direct proximity to the segment, so that it is guaranteed that the segment is permeated by the electric and/or magnetic field. This feature is accomplished for example by aligning the unit around the segment, especially in a ring-like assembly like an electromagnetic coil or, alternatively, by a sandwich-like built-up, wherein the segment is aligned between the components for generating an electric and/or magnetic field like e.g. a pair of electrode plates.

Furthermore, it is preferred if at least one control system for controlling the actively controllable unit and/or at least one control system for controlling the at least one unit for generating a magnetic and/or electric field is comprised. This control system for example can comprise any electronic switching circuits or electronic guidance systems, which provide a direct response to the actively controllable unit and/or the unit for generating a field, thereby enabling an active control to the transmitted force from the actively controllable unit towards the vibrating object.

Preferably, the device comprises at least one sensor for registration of the amplitude, frequency and/or phase of the vibration of the vibrating object. This enables the device to be actively controlled dependent on the vibration of the vibrating object. The data derived from this sensor, e.g. the character of the vibration, can be used to generate a feedback and thus allows an active control of the controllable device and/or the unit for generating a magnetic and/or electric field. Therefore, it is especially preferred if the at least one control system for controlling the actively controllable unit and/or at least one control system for controlling the at least one unit for generating a magnetic and/or electric field is coupled to the at least one sensor.

According to one especially preferred magnetic embodiment of the invention, the unit for generating a magnetic field comprises at least one electromagnetic coil. The electromagnetic coil thereby is powered by at least one regulable electric power supply.

Preferably, the electromagnetic coil is located within the space between the two elements.

It is further advantageous if the at least one electromagnetic coil is ring-like and aligned concentrically around the at least one segment. This embodiment enables a strong injection of the generated magnetic field into the at least one segment and thereby into the magnetorheological material, since the electromagnetic coil and the segment are in direct vicinity with respect to each other.

Furthermore, it is preferred that the force transmitting unit, especially the two elements, comprises at least one ferromagnetic material in the magnetic circuit, which preferably is selected from the group consisting of iron, cobalt, nickel, ferromagnetic steel, alloys thereof and/or transformator sheets. This embodiment provides that any of the parts of the force transmitting unit can be made of a ferromagnetic material. According to the invention, transformator sheets are defined as laminated sheets, which are known to the person skilled in the art. The usage of transformator sheets, for example as materials for the two elements, avoids the generation of eddy currents.

It is especially preferred, that the magnetic circuit in the device (1) is at least partially built by a material that exhibits a relative permeability µᵣ > 10, preferably > 100, especially preferred > 1000 and/or a saturation magnetisation of > 0.5 T, preferably > 1 T, especially preferred > 1.5 T.

Furthermore, it is advantageous if at least one permanent magnet is included in the magnetic circuit. This feature concerns an embodiment of the invention, wherein for example the two elements are permanently magnetized so that a constant magnetic field is present. This constant magnetic field permanently affects the rheological properties of the magnetorheological material, being included in the segment. Thereby, the magnetorheological material exhibits a base rigidity, which further can be effected by superposing the permanent magnetic field with a varying magnetic field generated by the electromagnetic coil. Therefore, the special advantage of this embodiment is that less electric power is needed in order to modulate the rheological properties of the magnetorheological material in such that a certain rigidity or stiffness is reached.

The magnetorheological materials are not limited in any respect, yet it is preferred, if the material is selected from the group consisting of magnetorheological (MR) fluids, MR elastomeres, MR thermoplastic elastomeres, MR gels and/or MR foams.

In another especially preferred electric embodiment of present invention, the at least one unit for generating an electric field comprises two electrodes. In such, it is provided that any of the parts of the at least one unit for generating an electric field can be shaped as two electrodes, but alternatively, it is also possible that two separate electrodes are included in this unit. It is especially advantageous, if the electrodes are composed by the two elements. These two electrodes are powered by at least one regulable electric power supply. The electrodes are separated spatially, in such that it is guaranteed that high voltages can be applied to the electrodes but no electric breakdown occurs.

Again, the electrorheological materials are not limited in any way, but are preferably selected from the group consisting of electrorheological (ER) fluids, ER elastomeres, ER thermoplastic elastomeres, ER gels and/or ER foams.

Furthermore, present invention provides a method for reducing vibrations of a vibrating object, wherein a varying force is generated by at least one actively controllable unit and is transferred to the vibrating object via at least one electrorheological and/or magnetorheological material, characterized in that the varying force is adjusted by modulation of the at least one electrorheological and/or magnetorheological material, in such that the varying force counteracts at least partially the force resulting from the vibration of the vibrating object. It is a special advantage of the method according to the invention that relatively large forces for damping vibrations can be generated and transmitted to the vibrating object. The use of ER or MR materials opens a wide range of possible applications.

Preferably, the force being generated by the at least one actively controllable device is varied in its magnitude and/or in its direction, especially, the force is varied in one, two and/or three dimensions.

Over more, it is advantageous, if the at least one device generates the force with a frequency, which at least temporarily matches the frequency of the vibration of the vibrating object, wherein it is further preferred that the phase of the generated force is at least temporarily and/or partially antipodal to the phase of the vibration of the vibrating object. By this feature, perturbing vibrations of the object can be reduced to virtually zero.

E.g. the varying force can be generated by two or more units. The combined use of more than one unit brings additional advantageous effects:
1) Two or more devices rotating at different frequencies compose and approximate an arbitrary exciting waveform, which according to Fourier can be expressed by series of simpler sinusoidal waves, i.e. a square wave can be composed by the fundamental frequency plus the 3rd harmonic running in a second "vibraspin", i.e. the second device.
2) The use of two or more devices enables the geometrical focus to be chosen and varied by applying the full biaxial damping force, i.e. two "vibraspin" placed radially opposed around a spindle can be driven in order to focus the action exactly near the TCP (tool central point).

This embodiment can be achieved in that each of the at least two units (2) generates varying forces, which are superimposed thus resulting in the varying force, which is transferred to the vibrating object (1'). In such, these embodiments enable special variations of the resulting force in time and/or in space.

In another preferred embodiment of the method according to the invention, the varying force which is generated by the at least one actively controllable device results from the rotation of an excentric and/or the agitation of a motor, preferably a motor selected from the group consisting of electric motors, combustion motors, electromagnetic actuators and/or voice coils. This embodiment allows the generation of effectively large harmonic forces with very simple technical means.

Preferably, the excentric is actuated by a motor, preferably an electromotor.

For providing a good match of the generated force and the vibration of the vibrating object, it is preferred if the speed of the motor, especially of the electromotor is controlled as a function of the frequency of the vibration of the vibrating object so that the frequency of the unbalance generated by the rotation of the excentric at least temporarily, preferably virtually at any time, matches the frequency of the vibration of the vibrating object.

Herein, it is preferred, if the motor, especially the electromotor, is controlled in such that the phase of the unbalance generated by the rotation of the excentric at least temporarily and/or partially is antipodal to the phase of the vibration of the vibrating object, i.e. the generated force can be described as counterforce to the force which results from the vibration.

Advantageously, the magnitude of the resulting varying force at least temporarily is adjusted at least to the same magnitude or larger than the magnitude of the force resulting from the vibration of the vibrating object. This is achieved by adjusting the weight of the excenter, the rotation speed of the excenter and/or the stiffness or rigidity of the ER or MR material. The special conditions for the afore-mentioned parameters can easily be determined by the person skilled in the art and of course depend on the characteristics of the vibration and/or the vibrating object.

Furthermore, it is preferred, if the adjusting of the magnitude of the force is achieved by modulation of at least one rheological property, preferably the shear modulus and/or the compression modulus of the at least one electrorheological and/or magnetorheological material.

Especially, the at least one rheological property, e.g. the shear modulus, is controlled by application of an electric and/or magnetic field, depending on the nature of the material, i.e. ER or MR material.

It is possible that the field intensity of the electric and/or magnetic field is held constant, varied and/or a constant field is superposed with a varying field.

The method according to the invention preferably is carried out with a device described in the foregoing.

Possible uses of the device as well as the method according to the invention are provided with claims 43 and 44.

The present invention is described in more detail in the subsequent description and the figures. However, the following description is not to be understood to limit the present invention in any respect.
- Figure 1: shows a general assembly of a device 1 ac- cording to present invention, which is cou- pled to a vibrating object 1'.
- Figure 2: shows a special embodiment of present in- vention, wherein the device 1 comprises a magnetic field generating unit, containing in this case an electromagnetic coil.
- Figure 3: depicts another perspective view (from above) of the device displayed in figure 2.
- Figure 4: describes the electric embodiment of the device 1, which comprises two electrodes for generating an electric field.

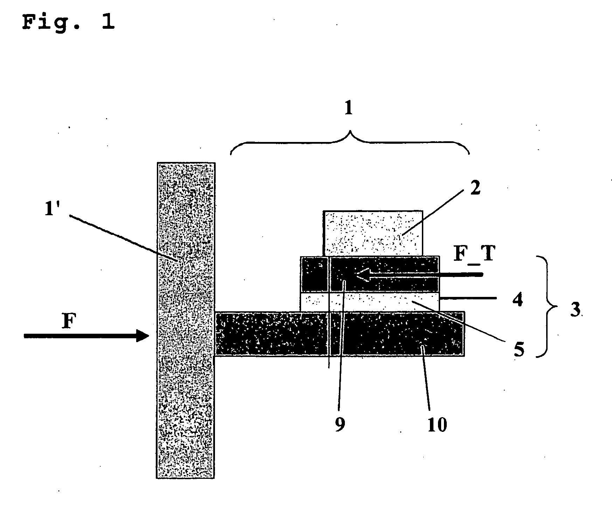

The generation and transmission of the counter-force generated by the extinction-oscillation (figure 1, F_T) onto the force, generated by the vibration to be extinguished (figure 1, F) is achieved according to the invention by the device 1, wherein a magnetorheological or an electrorheological material 5 in a segment 4 is comprised between two elements with parallelly aligned surfaces, which are movable relatively to each other. The magnetic or electric flux-lines run perpendicular to the surfaces. During the relative movement of the surfaces, the magnetorheological or electrorheological material is sheared (shear modulus). The strength of the mechanical coupling and thus the force to be transferred to the vibrating object 1' can be adjusted by the magnetic or electric field strength, which is generated by the unit 6 (which in this case is composed by the plates 9,10). Other possibilities of the transmittance of the force are the adjusting of the flow modulus, the squeeze modulus or mixed forms of movement of the named three modi together, depending on the nature of the ER or MR material to be used. Furthermore, one, two or three dimensional oscillations or vibrations can be generated by the device 2 and transferred via the magnetorheological or electrorheological material, which is included in the force transmitting unit 3.

A simple possibility to generate the counter-vibration is to use an electromotor, which drives a rotating mass with an unbalance (excenter). Thus, a relative small motor with small power consumption can generate relatively large forces (centrifugal forces). Because of the circular nature of the thus generated counter-vibration, also vibrations with amplitudes in two-dimensions can be compensated, these vibrations for example can occur during rotations of arbors of a machine or during stroke movements of lobes, pistons or plungers and the like.

The magnetic or electric field for stiffening the magnetorheological or electrorheological material usually is generated via an electromagnet with a coil or via electrodes, wherein the intensity of electric current in the coil defines the magnetic field strength or the flux density, whereas the voltage being applied to the electrodes defines the electric field strength, respectively. Due to integration of a permanent magnet into the magnetic circle, which generates the magnetic field for the magnetorheological material, a base force to be transferred can be generated without an electric current in the coil, i.e. without usage of electric energy, by permanently influencing the rheologic properties (i.e. stiffening) of the MR material.

Special embodiments of the device for reducing vibrations according to the invention provide that the magnetorheological material is an magnetorheological fluid (MRF), a magnetorheological gel (MRG), a magnetorheological elastomer (MRE) or a magnetorheological foam (MRFo). A MRG is a material, which in contrast to an MRF is soft, but not fluid. In analogy to an MRF, it can be deformed in any way irreversibly and be stiffened in a magnetic field. An MRE is a chemically cross-linked material, which therefore has a given shape from which it can be deformed reversibly only in limited ways. An MRFo is an elastomeric foam, whose pores are filled with an MRF. In analogy to an MRE, also an MRFo has a defined form, from which it can be deformed reversibly in only limited ways. Likewise to the forgoing, instead of magnetorheological material, also electrorheological material, such as electrorheological fluids (ERF), electrorheological gels (ERG), electrorheological elastomers (ERE) or electrorheological foams (ERFo) can be used.

Possible uses of the device according to the invention are electric controllable devices for reducing vibrations in which a distracting vibration is actively reduced. This is especially interesting for motors or engines with rotating parts, because here, due to the number of revolutions per minute, a special frequency of vibration is defined. The active device for reducing vibrations therefore is to be tuned to this frequency. Examples are engines in automobiles and ships, rotating drums in laundry machines as well as rotating spindles, for example in machine tools, such as milling, drilling or turning machines. Further fields of applications are the reducing of unbalances with rotational movements. Also, the compensation of one-dimensional vibrations resulting from pistons and the like is possible.

In figure 1, the principle build-up of the device 1 according to the invention is depicted. Hereby, the device 1 comprises one actively controllable unit 2, which generates a temporarily varying force (F_T), which is connected by force to the force transmitting unit 3. The force transmitting unit 3 herein comprises the unit for generating an electric and/or magnetic field 6, and also a segment 4, which contains an electrorheological and/or magnetorheological material 5. In this embodiment, the bordering elements of the force transmitting unit 3 act as the parts which guide the electric and/or magnetic field to the ER or MR material. The force transmitting unit 3 is connected to the vibrating object 1' with its side opposite to that which is connected to the device 2. The force generated by the device 2 is transferred to the force transmitting unit 3, which comprises two movable parts, in this special case consisting of the elements of the unit for generating the field 6 and guiding the field to the ER or MR material. By adjustment of the electric and/or magnetic field, the stiffness of the electrorheological and/or magnetorheological material 5 is controlled and thereby also the transmittance of the force (F_T) generated by the device 2 onto the vibrating object 1'. The generated force (F_T) is antipodal to the force (F) generated by the vibration of the vibrating object 1'.

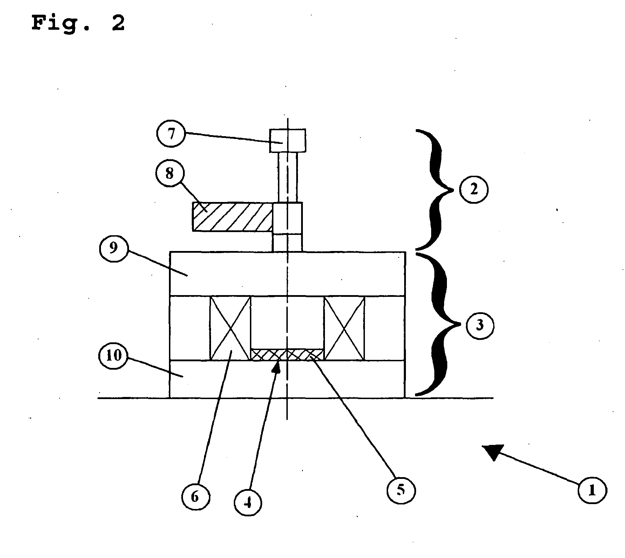

Figure 2 and figure 3 show one special embodiment according to the invention, wherein the device 1 comprises an actively controllable unit 2, which consists of an electric motor 7 and an thereby agitated excenter 8. This excenter 8 is directly fixed to the plate 9, which is movable with respect to the plate 10. Both plates 9 and 10 are comprised within the force transmitting unit 3. Preferably they are made of a magnetic flux guiding material. In this embodiment, the unit for generating a field is an electromagnetic coil 6, which is ring-like and aligned around a segment 4, which contains a magnetorheological material 5. The stiffness of the magnetorheological material 5 and thus the coupling of the force being generated by the device 2 to the plate 10 can be controlled by adjusting the magnetic field strength being generated by the electromagnetic coil 6. The vibrating object 1' (not shown) can be connected to the plate 10. Figure 3 shows the device as described in figure 2 from top view. Here, it becomes obvious, that the cross-sectional area of the segment 4 containing the magnetorheological material 5 is smaller than the cross-sectional area of the plates 9 and 10.

Over more, it is shown that the electromagnetic coil encloses the segment 4 by its ring-like shape.

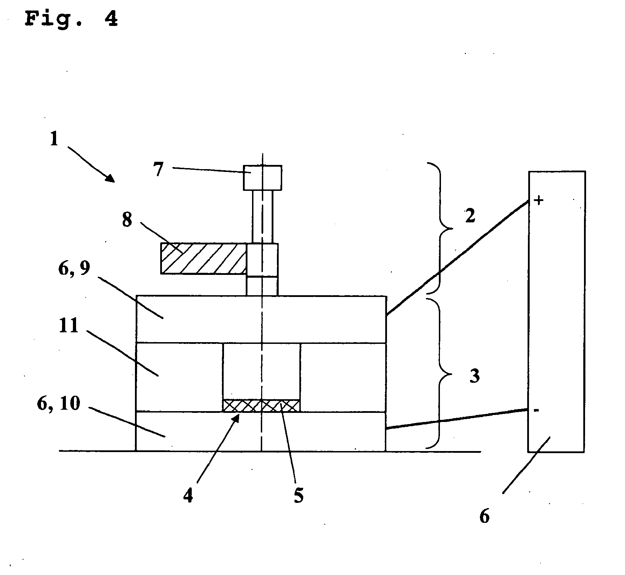

Figure 4 shows another special embodiment according to present invention. Again, as already described ' with figures 2 and 3, the actively controllable unit 2 consists of an electric motor 7 in connection with an excenter 8, which is directly connected to the plate 9. In this special case, the plates 9 and 10 are built of an electrically conductive material. Both plates 9 and 10 serve as electrodes which can be powered by a high voltage supply, which is part of the unit for generating the electric field 6. Both plates 9 and 10 are separated by an electrically insulating material (insulator) 11. Again, as already described with figures 2 and 3, the electrorheological material 5, which is included in the segment 4, can be controlled by the strength of the electric field being applied to the plates 9 and 10. The plates 9 and 10 are movable with respect to each other. The vibrating object 1' can be connected by force to the plate 10.

## Claims

1. Device (1) for reducing vibrations of a vibrating object (1'), wherein the device (1) comprises:
a) at least one actively controllable unit (2) for generating a temporarily varying force,
b) at least one force transmitting unit (3) which comprises at least one segment (4) which contains at least one electrorheological and/or magnetorheological material (5),
c) at least one unit (6) for generating an electric and/or magnetic field,
wherein the unit (2) is connected by force to the at least one force transmitting unit (3).

2. Device (1) according to claim 1, **characterized in that** the at least one unit (2) is at least one device for generating a force that varies in magnitude and/or direction.

3. Device (1) according to one of the preceding claims, **characterized in that** the at least one unit (2) is at least one device for generating a force that varies in one, two and/or three dimensions.

4. Device (1) according to one of the preceding claims, **characterized in that** the at least one unit (2) comprises at least one motor (7), preferably a motor selected from the group consisting of electric motors, combustion motors, electromagnetic actuators, voice coils and/or any other kind of actuators.

5. Device (1) according to the preceding claim, **characterized in that** the at least one motor (7) is connected by force to an excentric (8) for conversion of a circular motion into stroke movement, in such that the excentric (8) can be agitated by the motor (7).

6. Device (1) according to one of the preceding claims, **characterized in that** the at least one force transmitting unit (3) comprises two elements (9, 10) which are movable with respect to each other, border the force transmitting unit (3) and enclose the at least one segment (4), wherein the elements preferably are aligned parallel.

7. Device (1) according to the preceding claim, **characterized in that** two elements (9, 10) are selected from the group consisting of plates, cuboids, segments, ovoid shaped elements, spherical shells and/or cones.

8. Device (1) according to the preceding claim, **characterized in that** the elements (9, 10) are movable in one, two and/or three dimensions.

9. Device (1) according to one of the claims 6 to 8, **characterized in that** the element (9) is connected by force with the at least one unit (2), whereas the element (10) is connectable by force to the vibrating object (1').

10. Device (1) according to one of the claims 6 to 9, **characterized in that** the segment (4) has a cross-sectional area which is dimensioned smaller than the cross-sectional area of the elements (9, 10).

11. Device (1) according to one of the preceding claims, **characterized in that** the at least one unit (6) is located within the at least one force transmitting unit (3).

12. Device (1) according to one of the preceding claims, **characterized in that** the unit (6) for generating an electric and/or magnetic field is located in direct proximity to the segment (4), so that it is guaranteed that the segment (4) is permeated by the electric and/or magnetic field.

13. Device (1) according to one of the preceding claims, **characterized in that** at least one control system for controlling the unit (2) and/or at least one control system for controlling the at least one unit (6) is comprised.

14. Device (1) according to one of the preceding claims, **characterized in that** it comprises at least one sensor for registration of the amplitude, frequency and/or phase of the vibration of the vibrating object (1').

15. Device (1) according to one of the claims 13 and 14, **characterized in that** the at least one control system for controlling the unit (2) and/or at least one control system for controlling the at least one unit (6) is coupled to the at least one sensor for registration of the amplitude, frequency and or phase of the vibration of the vibrating object (1').

16. Device (1) according to one of the preceding claims, **characterized in that** the at least one unit (6) comprises at least one electromagnetic coil.

17. Device (1) according to the preceding claim, **characterized in that** the at least one unit (6) further comprises at least one regulable electrical power supply for powering the electromagnetic coil.

18. Device (1) according to one of the claims 16 or 17, **characterized in that** the at least one electromagnetic coil is located between the elements (9, 10).

19. Device (1) according to one of the claims 16 to 18, **characterized in that** the at least one electromagnetic coil is ring-like and aligned concentrically around the at least one segment (4).

20. Device (1) according to one of the claims 16 to 19, **characterized in that** the force transmitting unit (3), especially the at least one element (9) and/or (10) is part of a magnetic circuit system and comprises at least one ferromagnetic material, which preferably is selected from the group consisting of iron, cobalt, nickel, ferromagnetic steel and/or alloys thereof and/or transformator sheets.

21. Device (1) according to one of the claims 16 to 20, **characterized in that** the magnetic circuit in the device (1) is at least partially built by a material which has a relative permeability µᵣ > 10, preferably > 100, especially preferred > 1000 and/or a saturation magnetisation of > 0.5 T, preferably > 1 T, especially preferred > 1.5 T.

22. Device (1) according to claims 16 to 21, **characterized in that** the magnetic circuit system comprises at least one permanent magnet.

23. Device (1) according to one of the preceding claims, **characterized in that** the at least one magnetorheological material (5) is selected from the group consisting of magnetorheological (MR) fluids, MR elastomers, MR thermoplastic elastomers, MR gels and/or MR foams.

24. Device (1) according to one of the claims 1 to 15, **characterized in that** the at least one unit (6) comprises two electrodes, which preferably are composed of the elements (9) and (10).

25. Device (1) according to the preceding claim, **characterized in that** the unit (6) further comprises at least one regulable electrical power supply for powering the electrodes.

26. Device (1) according to one of the claims 24 to 25, **characterized in that** the at least one electrorheological material (5) is selected from the group consisting of electrorheological (ER) fluids, ER elastomers, ER thermoplastic elastomers, ER gels and/or ER foams.

27. Method for reducing vibrations of a vibrating object (1'), wherein a varying force is generated by at least one actively controllable unit (2) and is transferred to the vibrating object (1') via at least one electrorheological and/or magnetorheological material (5), wherein the varying force is adjusted by modulation of the at least one electrorheological and/or magnetorheological material (5), in such that the varying force counteracts at least partially the force resulting from the vibration of the vibrating object (1').

28. Method according to claim 27, **characterized in that** the force being generated by the at least one unit (2) is varied in its magnitude and/or in its direction in transmission to the vibrating object (1').

29. Method according to one of the claims 27 or 28, **characterized in that** the force being generated by the at least one unit (2) is varied in one, two and/or three dimensions.

30. Method according to one of the claims 27 to 29, **characterized in that** the at least one unit (2) generates the force with a frequency, which at least temporarily matches the frequency of the vibration of the vibrating object (1').

31. Method according to one of the claims 27 to 30, **characterized in that** the at least one unit (2) generates the force with a phase that at least temporarily and/or partially is antipodal to the phase of the vibration of the vibrating object (1').

32. Method according to claims 27 to 31, **characterized in that** two or more units (2) generate the varying force.

33. Method according to the preceding claim, **characterized in that** each of the at least two units (2) generates varying forces, which are superimposed thus resulting in the varying force, which is transferred to the vibrating object (1').

34. Method according to one of the claims 27 to 33, **characterized in that** the varying force being generated by the unit (2) results from the rotation of an excentric (8) and/or the agitation of a motor (7), preferably an motor selected from the group consisting of electric motors, combustion motors, electromagnetic actuators, voice coils and/or any other kind of actuators.

35. Method according to the preceding claim, **characterized in that** the excentric (8) is actuated by a motor (7), preferably an electromotor.

36. Method according to the preceding claim, **characterized in that** the speed of the motor, especially of the electromotor is controlled as a function of the frequency of the vibration of the vibrating object (1') so that the frequency of the unbalance generated by the rotation of the excentric (8) at least temporarily matches the frequency of the vibration of the vibrating object (1').

37. Method according to one of the claims 35 to 36, **characterized in that** the motor (7), especially the electromotor, is controlled in such that the phase of the unbalance generated by the rotation of the excentric (8) at least temporarily and/or partially is antipodal to the phase of the vibration of the vibrating object (1').

38. Method according to one of the claims 35 to 36, **characterized in that** the magnitude of the resulting varying force at least temporarily is adjusted at least to the same magnitude or larger than the magnitude of the force resulting from the vibration of the vibrating object (1').

39. Method according to preceding claim, **characterized in that** the adjusting of the magnitude of the force is achieved by modulation of at least one rheological property, preferably the shear modulus, the compression modulus and/or the Young's modulus of the at least one electrorheological and/or magnetorheological material (5).

40. Method according to the preceding claim, **characterized in that** the at least one rheological property is controlled by application of an electric and/or magnetic field.

41. Method according to the preceding claim, **characterized in that** the field intensity of the electric and/or magnetic field is held constant, varied and/or a constant field is superposed with a varying field.

42. Method according to one of the claims 27 to 41, **characterized in that** the method is carried out by a device according to one of the claims 1 to 26.

43. Use of the device according to one of the claims 1 to 26 for reducing vibrations and/or damping of unbalances, preferably of motors, turning drums, barrels, cylinders, reels, rolls, spindles and/or rotating parts.

44. Use of the method according to one of the claims 27 to 42 for reducing vibrations, damping and/or compensation of unbalances or unbalanced masses, preferably of motors, turning drums, barrels, cylinders, reels, rolls, spindles and/or rotating parts.

## Patentansprüche

1. Vorrichtung (1) zur Reduktion von Vibrationen eines vibrierenden Objektes (1'), wobei die Vorrichtung (1) umfasst:
a) zumindest eine aktiv kontrollierbare Einheit (2) zur Erzeugung einer temporär variierenden Kraft,
b) zumindest eine Kraftübertragungseinheit (3), die zumindest ein Segment (4) aufweist, das zumindest ein elektrorheologisches und/oder magnetorheologisches Material (5) umfasst,
c) zumindest eine Einheit (6) zur Erzeugung eines elektrischen und/oder magnetischen Feldes,
wobei die Einheit (2) kraftschlüssig mit der mindestens einen Kraftübertragungseinheit (3) verbunden ist.

2. Vorrichtung (1) gemäß Anspruch 1, **dadurch gekennzeichnet, dass** die zumindest eine Einheit (2) zumindest eine Vorrichtung zur Erzeugung einer Kraft, die sich in ihre Magnitude und/oder Richtung verändert, ist.

3. Vorrichtung (1) gemäß einem der vorhergehenden Ansprüche, **dadurch gekennzeichnet, dass** die zumindest eine Einheit (2) zumindest eine Vorrichtung zur Erzeugung einer Kraft, die in einer, zwei und/oder drei Dimensionen variiert, ist.

4. Vorrichtung (1) gemäß einem der vorhergehenden Ansprüche, **dadurch gekennzeichnet, dass** die zumindest eine Einheit (2) zumindest einen Motor (7), bevorzugt einen Motor ausgewählt aus der Gruppe bestehend aus elektrischen Motoren, Verbrennungsmotoren, elektromagnetischen Aktuatoren, Schwingspulen und/oder anderen Arten von Aktuatoren, umfasst.

5. Vorrichtung (1) gemäß dem vorhergehenden Anspruch, **dadurch gekennzeichnet, dass** der zumindest eine Motor (7) kraftschlüssig mit einem Exzenter (8) zur Umwandlung einer zirkulären Bewegung in eine Hubbewegung verbunden ist, so dass der Exzenter (8) durch den Motor (7) angetrieben werden kann.

6. Vorrichtung (1) gemäß einem der vorhergehenden Ansprüche, **dadurch gekennzeichnet, dass** die zumindest eine Kraftübertragungseinheit (3) zwei Elemente (9, 10) umfasst, die in Bezug aufeinander beweglich sind, an die Kraftübertragungseinheit (3) angrenzen, und das zumindest eine Segment (4) einschließen, wobei die Elemente bevorzugt parallel zueinander angeordnet sind.

7. Vorrichtung (1) nach dem vorhergehenden Anspruch, **dadurch gekennzeichnet, dass** die beiden Elemente (9, 10) ausgewählt sind aus der Gruppe bestehend aus Platten, Würfeln, Segmenten, ovalförmigen Elementen, sphärischen Schalen und/oder Konen.

8. Vorrichtung (1) gemäß dem vorhergehenden Anspruch, **dadurch gekennzeichnet, dass** die Elemente (9, 10) in einer, zwei oder drei Dimensionen beweglich sind.

9. Vorrichtung (1) gemäß einem der Ansprüche 6 - 8, **dadurch gekennzeichnet, dass** das Element (9) kraftschlüssig mit der zumindest einen Einheit (2) verbunden ist, wohingegen das Element (10) kraftschlüssig mit dem vibrierenden Objekt (1') verbindbar ist.

10. Vorrichtung (1) gemäß einem der Ansprüche 6 - 9, **dadurch gekennzeichnet, dass** das Segment (4) eine Querschnittsfläche aufweist, die kleiner ausgestaltet ist als die Querschnittsfläche der Elemente (9, 10).

11. Vorrichtung (1) gemäß einem der vorhergehenden Ansprüche, **dadurch gekennzeichnet, dass** die zumindest eine Einheit (6) innerhalb der Kraftübertragungseinheit (3) angeordnet ist.

12. Vorrichtung (1) gemäß einem der vorhergehenden Ansprüche, **dadurch gekennzeichnet, dass** die Einheit (6) zur Erzeugung eines elektrischen und/oder magnetischen Feldes in unmittelbarer Nachbarschaft zu dem Segment (4) angeordnet ist, so dass gewährleistet ist, dass das Segment (4) von dem elektrischen und/oder magnetischen Feld durchdrungen ist.

13. Vorrichtung (1) gemäß einem der vorhergehenden Ansprüche, **dadurch gekennzeichnet, dass** zumindest ein Kontrollsystem zur Kontrolle der Einheit (2) und/oder zumindest ein Kontrollsystem zur Kontrolle der zumindest einen Einheit (6) umfasst ist.

14. Vorrichtung (1) gemäß einem der vorhergehenden Ansprüche, **dadurch gekennzeichnet, dass** zumindest ein Sensor zur Erfassung der Amplitude, Frequenz und/oder Phase der Vibration des vibrierenden Objekts (1') umfasst ist.

15. Vorrichtung (1) gemäß einem der Ansprüche 13 und 14, **dadurch gekennzeichnet, dass** das zumindest eine Kontrollsystem zur Kontrolle der Einheit (2) und/oder das zumindest eine Kontrollsystem zur Kontrolle der zumindest einen Einheit (6) an den zumindest einen Sensor zur Registrierung der Amplitude, Frequenz und/oder Phase der Vibration des vibrierenden Objekts (1') angekoppelt ist.

16. Vorrichtung (1) gemäß einem der vorhergehenden Ansprüche, **dadurch gekennzeichnet, dass** die zumindest eine Einheit (6) zumindest eine elektromagnetische Spule umfasst.

17. Vorrichtung (1) gemäß einem der vorhergehenden Ansprüche, **dadurch gekennzeichnet, dass** die zumindest eine Einheit (6) weiter zumindest eine regulierbare elektrische Stromversorgung zur energetischen Versorgung der elektromagnetischen Spule umfasst.

18. Vorrichtung (1) gemäß einem der Ansprüche 16 oder 17, **dadurch gekennzeichnet, dass** die zumindest eine elektromagnetische Spule zwischen den Elementen (9, 10) angeordnet ist.

19. Vorrichtung (1) gemäß einem der Ansprüche 16 bis 18, **dadurch gekennzeichnet, dass** die zumindest eine elektromagnetische Spule ringförmig ist und konzentrisch um das zumindest eine Segment (4) ausgebildet ist.

20. Vorrichtung (1) gemäß einem der Ansprüche 16 bis 19, **dadurch gekennzeichnet, dass** die Kraftübertragungseinheit (3), insbesondere das zumindest eine Element (9) und/oder (10), Teil des Magnetkreissystems ist und zumindest ein ferromagnetisches Material, das bevorzugt ausgewählt ist aus der Gruppe bestehend aus Eisen, Kobalt, Nickel, ferromagnetischem Stahl und/oder Legierungen hiervon und/oder Transformatorblechen ausgewählt ist.

21. Vorrichtung (1) gemäß einem der Ansprüche 16 bis 20, **dadurch gekennzeichnet, dass** der Magnetkreis in der Vorrichtung (1) zumindest teilweise durch ein Material, das eine relative Permeabilität µᵣ >10, bevorzugt >100, insbesondere bevorzugt >1000 und/oder eine Sättigungsmagnetisierung von >0,5T, bevorzugt >1T, insbesondere bevorzugt >1,5T aufweist, ausgebildet ist.

22. Vorrichtung (1) gemäß einem der Ansprüche 16 bis 21, **dadurch gekennzeichnet, dass** das Magnetkreissystem zumindest einen Permanentmagneten umfasst.

23. Vorrichtung (1) gemäß einem der vorhergehenden Ansprüche, **dadurch gekennzeichnet, dass** das zumindest eine magnetorheologische Material (5) ausgewählt ist aus der Gruppe bestehend aus magnetorheologischen (MR) Flüssigkeiten, MR-Elastomeren, MRthermoplastischen Elastomeren, MR-Gelen und/oder MR-Schäumen.

24. Vorrichtung (1) gemäß einem der Ansprüche 1 - 15, **dadurch gekennzeichnet, dass** die zumindest eine Einheit (6) zwei Elektroden umfasst, die insbesondere aus den Elementen (9) und (10) gebildet sind.

25. Vorrichtung (1) gemäß dem vorhergehenden Anspruch, **dadurch gekennzeichnet, dass** die Einheit (6) weiter zumindest eine regulierbare elektrische Stromversorgung zur energetischen Versorgung der Elektroden umfasst.

26. Vorrichtung (1) gemäß einem der Ansprüche 24 - 25, **dadurch gekennzeichnet, dass** das zumindest eine elektrorheologische Material (5) ausgewählt ist aus der Gruppe bestehend aus elektrorheologischen (ER) Flüssigkeiten, ER-Elastomeren, ER-thermoplastischen Elastomeren, ER-Gelen und/oder ER-Schäumen.

27. Verfahren zur Reduktion von Vibrationen eines vibrierenden Objektes (1'), wobei eine variable Kraft durch zumindest eine aktiv kontrollierbare Einheit (2) erzeugt und auf das vibrierende Objekt (1') über zumindest ein elektrorheologisches und/oder magnetorheologisches Material (5) übertragen wird, wobei die variierende Kraft durch Modulation des zumindest einen elektrorheologischen und/oder magnetorheologischen Materials (5) so angepasst wird, dass die variierende Kraft zumindest teilweise der aus der Vibration des vibrierenden Objektes (1') resultierenden Kraft entgegenwirkt.

28. Verfahren gemäß Anspruch 27, **dadurch gekennzeichnet, dass** die durch die zumindest eine Einheit (2) erzeugte Kraft bezüglich ihrer Magnitude und/oder bezüglich ihrer Transmissionsrichtung bezüglich des vibrierenden Objektes (1') variiert wird.

29. Verfahren gemäß einem der Ansprüche 27 oder 28, **dadurch gekennzeichnet, dass** die von der zumindest einen Einheit (2) erzeugte Kraft in einer, zwei und/oder drei Dimensionen variiert wird.

30. Verfahren gemäß einem der Ansprüche 27 - 29, **dadurch gekennzeichnet, dass** die zumindest eine Einheit (2) die Kraft mit einer Frequenz erzeugt, die zumindest zeitweise der Frequenz der Vibration des vibrierenden Objektes (1') entspricht.

31. Verfahren gemäß einem der Ansprüche 27 - 30, **dadurch gekennzeichnet, dass** die zumindest eine Einheit (2) die Kraft mit einer Phase erzeugt, die zumindest teilweise und/oder partiell antipodal zu der Phase der Vibration des vibrierenden Objektes (1') ausgebildet ist.

32. Verfahren gemäß einem der Ansprüche 27 - 31, **dadurch gekennzeichnet, dass** zwei oder mehr Einheiten (2) die variierende Kraft erzeugen.

33. Verfahren gemäß dem vorhergehenden Anspruch, **dadurch gekennzeichnet, dass** eine jede der zumindest zwei Einheiten (2) variierende Kräfte erzeugt, die zu einer resultierenden variierenden Kraft überlagert werden, welche in das vibrierende Objekt (1') transferiert wird.

34. Verfahren gemäß einem der Ansprüche 27 - 33, **dadurch gekennzeichnet, dass** die variierende Kraft, die von der Einheit (2) erzeugt wird, aus der Rotation eines Exzenters (8) und/oder der Agitation eines Motors (7), bevorzugt eines Motors, ausgewählt aus der Gruppe bestehend aus den Elektromotoren, Verbrennungsmotoren, elektromagnetischen Aktuatoren, Schwingspulen und/oder Aktuatoren anderer Art resultiert.

35. Verfahren gemäß dem vorhergehenden Anspruch, **dadurch gekennzeichnet, dass** der Exzenter (8) durch einen Motor (7), bevorzugt einen Elektromotor, angetrieben wird.

36. Verfahren nach dem vorhergehenden Anspruch, **dadurch gekennzeichnet, dass** die Geschwindigkeit des Motors, insbesondere des Elektromotors, als Funktion der Frequenz der Vibration des vibrierenden Objektes (1') kontrolliert wird, so dass die Frequenz der Unwucht, die durch die Rotation des Exzenters (8) erzeugt wird, zumindest zeitweise der Frequenz der Vibration des vibrierenden Objektes (1') entspricht.

37. Verfahren gemäß einem der Ansprüche 35 - 36, **dadurch gekennzeichnet, dass** der Motor (7), insbesondere der Elektromotor, so kontrolliert wird, dass die Phase der Unwucht, die durch die Rotation des Exzenters (8) erzeugt wird, zumindest zeitweise und/oder partiell antipodal zu der Phase der Vibration des vibrierenden Objektes (1') ausgebildet ist.

38. Verfahren gemäß einem der Ansprüche 35 - 36, **dadurch gekennzeichnet, dass** die Magnitude der resultierenden variierenden Kraft zumindest zeitweise zumindest auf die gleiche Magnitude oder größer als die Magnitude der Kraft, die aus der Vibration des vibrierenden Objektes (1') resultiert, eingestellt wird.

39. Verfahren nach dem vorhergehenden Anspruch, **dadurch gekennzeichnet, dass** die Einstellung der Magnitude der Kraft durch Modulation zumindest einer rheologischen Eigenschaft, insbesondere des Schubmoduls, des Kompressionsmoduls oder des Elastizitätsmoduls des zumindest einen elektrorheologischen und/oder magnetorheologischen Materials (5) erreicht wird.

40. Verfahren gemäß dem vorhergehenden Anspruch, **dadurch gekennzeichnet, dass** zumindest eine rheologische Eigenschaft durch Anlegen eines elektrischen und/oder magnetischen Feldes kontrolliert wird.

41. Verfahren gemäß dem vorhergehenden Anspruch, **dadurch gekennzeichnet, dass** die Feldintensität des elektrischen und/oder magnetischen Feldes konstant gehalten, variiert und/oder ein konstantes Feld mit einem variierenden Feld überlagert wird.

42. Verfahren gemäß einem der Ansprüche 27 - 41, **dadurch gekennzeichnet, dass** das Verfahren mit einer Vorrichtung gemäß einem der Ansprüche 1 - 26 ausgeführt wird.

43. Verwendung einer Vorrichtung gemäß einem der Ansprüche 1- 26 zur Reduktion von Vibrationen und/oder Dämpfen von Unwuchten, insbesondere von Motoren, Wendetrommeln, Fässern, Zylindern, Bandrollen, Rollen, Spindeln und/oder rotierenden Teilen.

44. Verwendung des Verfahrens gemäß einem der Ansprüche 27 - 42 zur Reduktion von Vibrationen und/oder Dämpfen von Unwuchten, insbesondere von Motoren, Wendetrommeln, Fässern, Zylindern, Bandrollen, Rollen, Spindeln und/oder rotierenden Teilen.

## Revendications

1. Dispositif (1) pour réduire les vibrations d'un objet vibrant (1'), dans lequel le dispositif (1) comprend :
a) au moins une unité pouvant être commandée de manière active (2) pour générer une force temporairement variable,
b) au moins une unité de transmission de force (3) qui comprend au moins un segment (4) qui contient au moins un matériau électrorhéologique et/ou magnétorhéologique (5),
c) au moins une unité (6) pour générer un champ électrique et/ou magnétique,
dans lequel l'unité (2) est reliée par force à la au moins une unité de transmission de force (3).

2. Dispositif (1) selon la revendication 1, **caractérisé en ce que** la au moins une unité (2) est au moins un dispositif pour générer une force dont l'amplitude et/ou la direction varient.

3. Dispositif (1) selon l'une des revendications précédentes, **caractérisé en ce que** la au moins une unité (2) est au moins un dispositif pour générer une force qui varie dans une, deux et/ou trois dimension(s).

4. Dispositif (1) selon l'une des revendications précédentes, **caractérisé en ce que** la au moins une unité (2) comprend au moins un moteur (7), de préférence un moteur sélectionné dans le groupe consistant en des moteurs électriques, des moteurs à combustion, des actionneurs électromagnétiques, des bobines acoustiques et/ou n'importe quel autre type d'actionneur.

5. Dispositif (1) selon la revendication précédente, **caractérisé en ce que** le au moins un moteur (7) est relié par force à un excentrique (8) pour la conversion d'un mouvement circulaire en un mouvement de course, de sorte que l'excentrique (8) puisse être agité par le moteur (7).

6. Dispositif (1) selon l'une des revendications précédentes, **caractérisé en ce que** la au moins une unité de transmission de force (3) comprend deux éléments (9, 10) qui sont mobiles l'un par rapport à l'autre, délimitent l'unité de transmission de force (3) et enferment le au moins un segment (4), dans lequel les éléments sont de préférence alignés en parallèle.

7. Dispositif (1) selon la revendication précédente, **caractérisé en ce que** les deux éléments (9, 10) sont choisis dans le groupe consistant en des plaques, des cuboïdes, des segments, des éléments de forme ovoïde, des coques sphériques et/ou des cônes.

8. Dispositif (1) selon la revendication précédente, **caractérisé en ce que** les éléments (9, 10) sont mobiles dans une, deux et/ou trois dimensions.

9. Dispositif (1) selon l'une des revendications 6 à 8, **caractérisé en ce que** l'élément (9) est relié par force à la au moins une unité (2), tandis que l'élément (10) peut être relié par force à l'objet vibrant (1').

10. Dispositif (1) selon l'une des revendications 6 à 9, **caractérisé en ce que** le segment (4) a une section transversale qui a une dimension inférieure à la section transversale des éléments (9, 10).

11. Dispositif (1) selon l'une des revendications précédentes, **caractérisé en ce que** la au moins une unité (6) est située à l'intérieur de la au moins une unité de transmission de force (3).

12. Dispositif (1) selon l'une des revendications précédentes, **caractérisé en ce que** l'unité (6) pour générer un champ électrique et/ou magnétique est située à proximité directe du segment (4), de sorte qu'il est garanti que le segment (4) est traversé par le champ électrique et/ou magnétique.

13. Dispositif (1) selon l'une des revendications précédentes, **caractérisé en ce qu'**au moins un système de commande pour commander l'unité (2) et/ou au moins un système de commande pour commander la au moins une unité (6) sont inclus.

14. Dispositif (1) selon l'une des revendications précédentes, **caractérisé en ce qu'**il comprend au moins un capteur pour l'enregistrement de l'amplitude, de la fréquence et/ou de la phase de la vibration de l'objet vibrant (1').

15. Dispositif (1) selon l'une des revendications 13 et 14, **caractérisé en ce que** le au moins un système de commande pour commander l'unité (2) et/ou au moins un système de commande pour commander la au moins une unité (6) sont couplés à le au moins un capteur pour enregistrer l'amplitude, la fréquence et/ou la phase de la vibration de l'objet vibrant (1').

16. Dispositif (1) selon l'une des revendications précédentes, **caractérisé en ce que** la au moins une unité (6) comprend au moins une bobine électromagnétique.

17. Dispositif (1) selon la revendication précédente, **caractérisé en ce que** la au moins une unité (6) comprend en outre au moins une alimentation électrique réglable pour alimenter la bobine électromagnétique.

18. Dispositif (1) selon l'une des revendications 16 ou 17, **caractérisé en ce que** la au moins une bobine électromagnétique est située entre les éléments (9, 10).

19. Dispositif (1) selon l'une des revendications 16 à 18, **caractérisé en ce que** la au moins une bobine électromagnétique est similaire à une bague et alignée de manière concentrique autour du au moins un segment (4).

20. Dispositif (1) selon l'une des revendications 16 à 19, **caractérisé en ce que** l'unité de transmission de force (3), en particulier le au moins un élément (9) et/ou (10), fait partie d'un système de circuit magnétique et comprend au moins un matériau ferromagnétique, qui est de préférence choisi dans le groupe consistant en le fer, le cobalt, le nickel, un acier ferromagnétique et/ou des alliages de ceux-ci et/ou des feuilles de transformateur.

21. Dispositif (1) selon l'une des revendications 16 à 20, **caractérisé en ce que** le circuit magnétique dans le dispositif (1) est au moins partiellement réalisé dans un matériau qui a une perméabilité relative µᵣ > 10, de préférence > 100, particulièrement préférée > 1000 et/ou une magnétisation de saturation > 0,5 T, de préférence > 1 T, particulièrement préférée > 1,5 T.

22. Dispositif (1) selon les revendications 16 à 21, **caractérisé en ce que** le système de circuit magnétique comprend au moins un aimant permanent.

23. Dispositif (1) selon l'une des revendications précédentes, **caractérisé en ce que** le au moins un matériau magnétorhéologique (5) est choisi dans le groupe consistant en des fluides magnétorhéologiques (MR), des élastomères MR, des élastomères thermoplastiques MR, des gels MR et/ou des mousses MR.

24. Dispositif (1) selon l'une des revendications 1 à 15, **caractérisé en ce que** la au moins une unité (6) comprend deux électrodes, qui sont de préférence composées des éléments (9) et (10).

25. Dispositif (1) selon la revendication précédente, **caractérisé en ce que** l'unité (6) comprend en outre au moins une alimentation électrique réglable pour alimenter les électrodes.

26. Dispositif (1) selon l'une des revendications 24 à 25, **caractérisé en ce que** le au moins un matériau électrorhéologique (5) est choisi dans le groupe consistant en des fluides électrorhéologiques (ER), des élastomères ER, des élastomères thermoplastiques ER, des gels ER et/ou des mousses ER.

27. Procédé pour réduire les vibrations d'un objet vibrant (1'), dans lequel une force variable est générée par au moins une unité pouvant être commandée de manière active (2) et est transférée à l'objet vibrant (1') par l'intermédiaire d'au moins un matériau électrorhéologique et/ou magnétorhéologique (5), dans lequel la force variable est ajustée par modulation du au moins un matériau électrorhéologique et/ou magnétorhéologique (5), de sorte que la force variable contrebalance au moins partiellement la force résultant de la vibration de l'objet vibrant (1').

28. Procédé selon la revendication 27, **caractérisé en ce que** la force générée par la au moins une unité (2) varie quant à son amplitude et/ou sa direction lors de sa transmission à l'objet vibrant (1').

29. Procédé selon l'une des revendications 27 ou 28, **caractérisé en ce que** la force générée par la au moins une unité (2) varie dans une, deux et/ou trois dimensions.

30. Procédé selon l'une des revendications 27 à 29, **caractérisé en ce que** la au moins une unité (2) génère la force avec une fréquence qui correspond au moins temporairement à la fréquence de la vibration de l'objet vibrant (1').

31. Procédé selon l'une des revendications 27 à 30, **caractérisé en ce que** la au moins une unité (2) génère la force avec une phase qui est au moins temporairement et/ou partiellement aux antipodes de la phase de la vibration de l'objet vibrant (1').

32. Procédé selon les revendications 27 à 31, **caractérisé en ce que** deux unités (2) ou plus génèrent la force variable.

33. Procédé selon la revendication précédente, **caractérisé en ce que** chacune des au moins deux unités (2) génère des forces variables, qui sont superposées, résultant ainsi en la force variable, qui est transférée à l'objet vibrant (1').

34. Procédé selon l'une des revendications 27 à 33, **caractérisé en ce que** la force variable générée par l'unité (2) résulte de la rotation d'un excentrique (8) et/ou de l'agitation d'un moteur (7), de préférence d'un moteur choisi dans le groupe consistant en des moteurs électriques, des moteurs à combustion, des actionneurs électromagnétiques, des bobines acoustiques et/ou n'importe quel autre type d'actionneur.

35. Procédé selon la revendication précédente, **caractérisé en ce que** l'excentrique (8) est actionné par un moteur (7), de préférence un moteur électrique.

36. Procédé selon la revendication précédente, **caractérisé en ce que** la vitesse du moteur, en particulier du moteur électrique, est commandée en fonction de la fréquence de la vibration de l'objet vibrant (1') de sorte que la fréquence du déséquilibre généré par la rotation de l'excentrique (8) corresponde au moins temporairement à la fréquence de la vibration de l'objet vibrant (1').

37. Procédé selon l'une des revendications 35 à 36, **caractérisé en ce que** le moteur (7), en particulier le moteur électrique, est commandé de telle sorte que la phase du déséquilibre généré par la rotation de l'excentrique (8) soit au moins temporairement et/ou partiellement aux antipodes de la phase de la vibration de l'objet vibrant (1').

38. Procédé selon l'une des revendications 35 à 36, **caractérisé en ce que** l'amplitude de la force variable résultante est au moins temporairement ajustée au moins à une amplitude identique ou supérieure à l'amplitude de la force résultant de la vibration de l'objet vibrant (1').

39. Procédé selon la revendication précédente, **caractérisé en ce que** l'ajustement de l'amplitude de la force est réalisé par modulation d'au moins une propriété rhéologique, de préférence le module de cisaillement, le module de compression et/ou le module de Young du au moins un matériau électrorhéologique et/ou magnétorhéologique (5).

40. Procédé selon la revendication précédente, **caractérisé en ce que** la au moins une propriété rhéologique est commandée par l'application d'un champ électrique et/ou magnétique.

41. Procédé selon la revendication précédente, **caractérisé en ce que** l'intensité de champ du champ électrique et/ou magnétique est maintenue constante, variable et/ou un champ constant est superposé à un champ variable.

42. Procédé selon l'une des revendications 27 à 41, **caractérisé en ce que** le procédé est mis en oeuvre par un dispositif selon l'une des revendications 1 à 26.

43. Utilisation du dispositif selon l'une des revendications 1 à 26 pour réduire des vibrations et/ou amortir des déséquilibres, de préférence de moteurs, de tambours rotatifs, de barillets, de cylindres, de bobines, de rouleaux, de broches et/ou de pièces rotatives.

44. Utilisation du procédé selon l'une des revendications 27 à 42 pour réduire des vibrations, amortir et/ou compenser des déséquilibres ou des masses non équilibrées, de préférence de moteurs, de tambours rotatifs, de barillets, de cylindres, de bobines, de rouleaux, de broches et/ou de pièces rotatives.
